# EUROPEAN PATENT APPLICATION

(11) **EP 1 876 575 A1**
(43) Date of publication of application: **09.01.2008**
(21) Application number: 07110996.1
(22) Date of filing: 25.06.2007
(51) Int. Cl.: G09B 21/00

(54) **User interface for visually impaired people**

(30) Priority: 07.07.2006 EP 06116805
(71) Applicant: Océ-Technologies B.V., 5914 CC Venlo (NL)
(72) Inventor: Kuijpers, Martinus W.P., 6161 HW, Geleen (NL); Meijer, Joost, 5921 HC, Venlo (NL)
(74) Representative: Vanoppen, Ronny R.J.

(57) **Abstract**

The present invention relates to an user interface (6) for enabling a visually impaired person to operate a multifunctional system (2), comprising a plurality of tactile selection elements (8a,8b,8c) for selecting options, a tactile guiding structure (10) for leading an object to the tactile selection elements (8a,8b,8c), audible assisting means (12) for reading out a plurality of phrases, each one of said phrases identifying a selectable option during operation of the multifunctional system (2). Tactile query elements (14a,14b,14c) are provided along the tactile guiding structure (10), each one of said tactile query elements (14b) being arranged upstream from a corresponding group of tactile selection elements (8g,8h,8i,8j), the activation of each tactile query element (14b) causing the audible assisting means (12) to read out a plurality of phrases each identifying a selectable option from said group, the tactile guide structure portion located downstream from the tactile query element (14b) comprising a plurality of paths (10g,10h,10i,10j), each one of said paths leading to a tactile selection element (8g,8h,8i,8j) of said group.

## Description

The present invention relates to an user interface for enabling a visually impaired person to operate a multifunctional system, comprising a plurality of tactile selection elements for selecting options, a tactile guiding structure for leading an object to the tactile selection elements, audible assisting means for reading out a plurality of phrases, each one of said phrases identifying a selectable option during operation of the multifunctional system.

Visually impaired persons often have difficulty operating multifunctional systems such as office equipment with a conventional user interface or touch screen displays, because the meaning of the buttons or selection areas first has to be read in order to make the appropriate selection. User interfaces provided with tactile elements for selecting options and audible assisting means for identifying the options and connected to a multifunctional system facilitate the operation thereof by visually impaired people. Tactile elements are elements which are perceptible to the sense of touch either directly with a finger tip, for example, or through an augmentative device.

An user interface of the type above is known from US patent application 2004/0066422. The user interface is provided with a guide structure having a reference point used as a point to count the relative position of touch points leading to a corresponding touch button. The user interface is also provided with an audio unit to enable a visually impaired person to select a desired option. When the audio unit is activated, the available options are read with their associated count. A user may start from the reference point, slide the finger down counting the number of touch points traversed and use the exit at the count associated with the desired option to select the corresponding touch button.

Due to the complex technical implementation of the known user interface, visually impaired people have to be trained extensively to locate a touch button in order to select a desired option. Once an option is selected, the user has to slide his/her finger back to the reference point and wait until the next available options are read. This a complex process and users may literally lost their way through the different abstract functional levels. Since each touch button is associated to a different option depending on the functional level, a user will not remember easily the way to operate the user interface. Especially, the known user interface feels very unnatural.

It is an object of the present invention to provide an user interface with an increased user friendliness.

In accordance with the invention, this object is accomplished in an user interface of the above mentioned kind, wherein tactile query elements are provided along the tactile guiding structure, each one of said tactile query elements being arranged upstream from a corresponding group of tactile selection elements, the activation of each tactile query element causing the audible assisting means to read out a plurality of phrases each identifying a selectable option from said group, the tactile guide structure portion located downstream from the tactile query element comprising a plurality of paths, each one of said paths leading to a tactile selection element of said group.

Due to the arrangement of the tactile query element upstream from a corresponding group of tactile selection elements and to the presence of paths leading to the tactile selection elements, downstream from said tactile query element, a user friendly user interface is provided, with an easy to follow way through the tactile selection elements. When a visually impaired user activates a tactile query element and listens to the phrases, he or she can easily identify the paths leading to the appropriate selection elements. With the user interface of the invention, it is possible to use motoric memory to quickly select the desired options. A fully physical, tactile and intuitive approach is generally preferred by visually impaired people.

The invention will now be explained with reference to the following exemplified embodiments of the present invention, and illustrated by reference to the drawings.
Fig. 1 illustrates a multifunctional system to which an user interface for visually impaired people is connected.
Fig. 2 represents a top view of the user interface according to an embodiment of the invention.
Fig. 3 shows a detail of the central area of the user interface.
Fig. 4 illustrates schematically the relationship between a read out word and an associated path leading to the corresponding selection element.

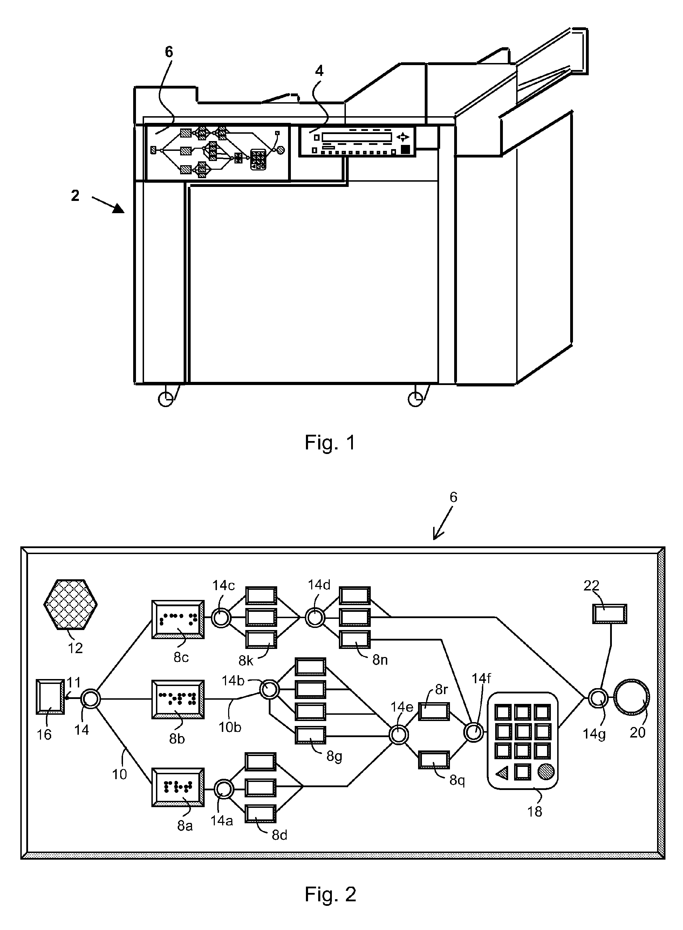

The user interface according to an embodiment of the invention may be used in connection with a multifunctional system such as a print, copy and scan system located in a workplace. The print, copy and scan system 2 shown in Fig. 1 comprises a printing unit, a copying unit and a scanning unit, a conventional user interface unit 4 and an user interface 6 for enabling a visually impaired person to operate the system. The user interface is provided with connection means for enabling the transmission of signals between the controller of the multifunctional system 2 and the user interface 6, such as connection card, a cable, a wireless transmitter/receiver unit or the like. The user interface enables the specification of a job to be executed by the multifunctional system, for example in this embodiment a print job, a copy job or a scan job.

The functionality of the user interface 6 will now be detailed with reference to Figures 2, 3 and 4. The user interface comprises a plurality of tactile selection elements 8a, 8b, 8c, 8d, 8g, 8h, 8i, 8j, 8k, 8n, 8q, 8r, which are for example outwards projecting touch buttons. The tactile selection elements may be implemented as other types of switching mechanisms for causing the transmission of an electrical signal to the user interface's controller when activated by the user, such as photosensors, inductive sensors, or the like. Since the user interface is intended for visually impaired users, the presence of a tactile selection element is preferably very easily detectable by the sense of touch, while the working thereof may be non-mechanical. An option related to the operation of the multifunctional system 2 is associated to each one of said tactile selection elements. For example, the option 'print' is associated to the tactile selection element 8a, the option 'copy' is associated to the tactile selection element 8b and the option 'scan' is associated to the selection element 8c. Other options available are job attributes, related to either a scan, a copy or a print job, such as layout options, finishing options etc. When a touch button is pressed by a user, the associated option is selected. A tactile structure such as an embossed ideogram or Braille letters may be provided on top of the touch buttons in order to assist the user in identifying or remembering the option associated with the touch button. Such structures are provided as a complementary support only, realising however that some visually impaired users may not understand or remember their meaning. Braille letters are shown as an example on the touch buttons 8a, 8b and 8c.

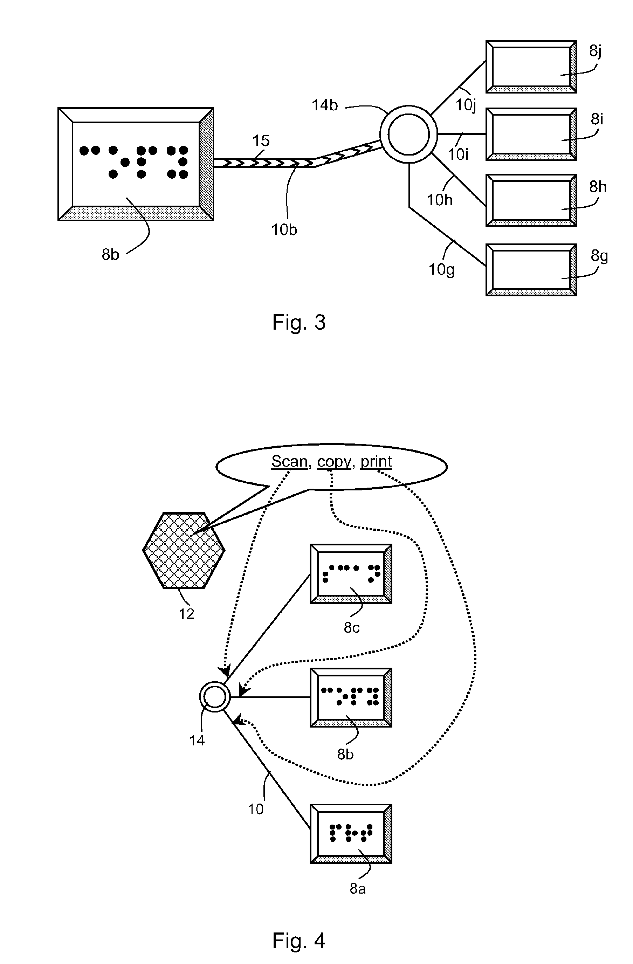

The user interface 6 further comprises a tactile guiding structure 10 for leading an object (a user's finger or any specialised augmentative communication device such as a mouth stick, if required) to the tactile selection elements. The tactile guiding structure 10 has a relief which is perceptible to the sense of touch, and comprises for example a plurality of ridged segments or grooved segments. The tactile guiding structure 10 forms a net enabling a visual impaired user to navigate with his/her finger or another object between the touch buttons in order to make selections. Segments 10b, 10g, 10h, 10i and 10j referenced in Figs. 2 and 3, and in practice, many more segments are available on the user interface. The segments define paths enabling the user to progress with his/her finger from a touch element to another touch element. The tactile guiding structure 10 has an origin point 11 located in the vicinity of a start touch button 16. Alternately, the element 16 may be a fingerprint sensor, in order to identify the person using the system. This is particularly useful when the user wishes to execute a print job, said print job being received by the printer in a personal account of a mailbox system. The print job can then be automatically retrieved by the system without the user having to browse through print jobs of other users.

Starting from the origin point 11, a user may then follow a number of segments from the left to the right, activate the appropriate tactile selection elements and finish either by activating a 'completion' touch button 20 which activates the previously defined scan, copy or print job or a 'cancel' touch button 22. Doing so, a given 'route' has been followed by the user's finger tip, whereby a number of options have been selected and a scan, print or copy job has been defined. In the embodiment shown in Fig. 2, a scan, print or copy job is defined by a user displacing his/her finger tip mainly from the left to the right. The direction of the finger's displacement which enables a job creation is called hereinafter 'progression direction'. When a user moves his/her finger from a selection element to a next selection element, this occurs in said 'progression direction'. Optionally, the guiding structure 10 may be provided with means for enabling tactile recognition of a direction, for example a top serrated structure feeling soft in the progression direction and feeling rough in the opposite direction. This is illustrated in Fig. 3, on the portion 10b only. Due to the presence of V-shaped projecting elements 15, the guiding structure feels soft in the progression direction, while it feels rough in the opposite direction. These V-shaped elements also have the function of arrows indicating the progression direction.

The user interface 6 also comprises audible assisting means such as a speaker system 12 for emitting supportive synthetic speech or recorded voices. The speaker system 12, in co-ordination with an embedded controller (not shown), is suited for reading out a plurality of phrases, each one of said phrases identifying a selectable option during operation of the multifunctional system 2. The working of the audible assisting means is explained in detail hereinafter.

A plurality of tactile query elements 14, 14a, 14b, 14c, 14d, 14e, 14f, 14g are provided along the tactile guiding structure 10. The tactile query elements may be implemented as touch buttons. The tactile query elements may be implemented as other types of switching mechanisms for causing the transmission of an electrical signal to the user interface's controller when activated by the user, such as photosensors, inductive sensors, or the like. Since the user interface is intended for visually impaired users, the presence of a tactile query element is preferably very easily detectable by the sense of touch, while the working thereof may be non-mechanical. Each one of said tactile query elements is arranged upstream from a corresponding group of tactile selection elements, with respect to the progression direction. For example, in Fig. 2, the tactile query element 14 is arranged upstream from a group of tactile selection elements comprising the elements 8a, 8b and 8c. Similarly, Fig. 3 shows that the tactile query element 14b is arranged upstream from a group of tactile selection elements comprising the elements 8g, 8h, 8i and 8j.

The activation of each tactile query element causes the audible assisting means to read out a plurality of phrases identifying each selectable option the corresponding following phrases are read out, using synthetic speech or a pre-recorded voice. For example, when the query button 14 is activated, the speaker system 12 reads out the following words: 'scan', 'copy', 'print' (see Fig. 4).

The tactile guide structure portion located downstream from the tactile query element (with respect to the progression direction) comprises a plurality of paths, each one of said paths leading to one tactile selection element of said group. As is seen in Fig. 2, three paths are located downstream (i.e. right) from the tactile query element 14, each one of said paths leading, respectively, to the tactile selection elements 8c, 8b, 8a. Thus, after having heard the phrases 'scan', 'copy', 'print', the user may easily follow with his/her finger tip the appropriate path and encounter at the end of the path the selection button he or she desires to activate to select the corresponding option. When a visually impaired user is instructed on how to operate the user interface, a sequence convention has to be explained. For example, the first spoken phrase could be associated to the top most positioned path, the second spoken phrase could be associated to the top most but one path and so on, as is shown schematically in Fig. 4. In Fig. 4, the dotted arrows represent an association between a read out word and the path to be followed by the visually impaired user.

An example is now given, whereby a visually impaired user wanting to execute a copy job, operates the multifunctional system 2 with the use of the user interface of the invention. In order to activate the user interface 6, the user pushes the start touch button 16 and slides his/her finger to the right to reach the origin point 11 of the tactile guide structure. Then the user, with his/her finger tip, follows the guide structure portion located rightly from the origin point and encounters soon the first tactile query element 14. The user may activate the touch button 14, which will cause the audible assisting means to read out the phrases 'scan', 'copy'. 'print'. Since the user wants to execute a copy job, he or she chooses the middle path leading to the tactile selection button 8b (see Fig. 4).

The user encounters then the touch button 8b, activates it for selecting the option 'copy' and continues his/her finger movement along the path 10b and according to the progression direction, i.e. from the left to the right, as is shown in Fig. 3. At the end of the path 10b, the user encounters the tactile query element 14b and activates it. This causes the speaker system 12 to read out phrases identifying the options available at this moment of the job creation. The options from the group of tactile selection elements 8g, 8h, 8i and 8j are available and may be related to the size transformation between the original document and the copy document, i.e. scaling. For example, if the touch buttons 8j, 8i, 8h and 8g correspond, respectively to the options 'size reduction', 'no scaling', 'size increase 140%', 'size increase 160%', phrases identifying the options are read out in this order by the speaker system 12. If the user wishes to obtain a non-scaled copy, he or she follows the path 10i which leads his/her finger tip to the tactile selection button 8i for selecting the option 'no scaling'. Continuing the displacement according to the progression direction, the visually impaired user encounters the tactile query element 14e. Its activation causes the speaker system to read the options available, which identify the function of the tactile selection buttons 8r and 8q, for example'1-sided' or '2-sided', respectively. The user follows the appropriate path located downwards from the query button 14e and may select the desired option. After having pressed either the selection button 8q or 8r, he or she follows the path and feels the next query button 14f. Its activation causes the speaker system 12 to read out the functionalities of the selection elements comprised in a numeric pad 18 (the paths inside the pad 18 are not shown). In this case, the desired number of copies may be entered.

Continuing the progression, the user encounters finally the query button 14 g, which activation causes the audible assisting means 12 to speak out the available options 'cancel 'and 'completion'. Optionally, activating the query button 14g may cause the speaker system 12 to read out the options selected during the job definition, as a last check for the user. If the user wants to execute the previously defined job, he or she takes the path leading to the completion button 20, presses said button, which causes the apparatus 2 to execute the copy job according to the selected options.

In the case that a visually impaired user uses frequently the user interface of the invention, he or she may develop motoric memory. When the user encounters a tactile query element, he or she may remember the options available at this moment of the job creation. Activation of the query element may be skipped and the user may follow the appropriate path, based on memory skills. Indeed, if a user remembers the options available, he or she appreciates skipping the activation of the query button, which leads to gain of time and avoids possible irritation caused by waiting and useless repetition. On the other hand, if a user has forgotten the meaning of selection elements, the query button provides a valuable assistance when activated.

## Claims

1. User interface (6) for enabling a visually impaired person to operate a multifunctional system, comprising a plurality of tactile selection elements (8a, 8b, 8c) for selecting options, a tactile guiding structure (10) for leading an object to the tactile selection elements (8a, 8b, 8c), audible assisting means (12) for reading out a plurality of phrases, each one of said phrases identifying a selectable option during operation of the multifunctional system, **characterised in that** tactile query elements (14, 14a, 14b) are provided along the tactile guiding structure (10), each one of said tactile query elements (14, 14a, 14b) being arranged upstream from a corresponding group of tactile selection elements, the activation of each tactile query element (14, 14a, 14b) causing the audible assisting means (12) to read out a plurality of phrases each identifying a selectable option from said group, the tactile guide structure portion located downstream from the tactile query element (14, 14a, 14b) comprising a plurality of paths (10g, 10h, 10i, 10j), each one of said paths (10g, 10h, 10i, 10j) leading to a tactile selection element of said group.

2. User interface according to claim1, the tactile guiding structure (10) comprising serrated elements (15) enabling the recognition of a direction of progression.
